# EUROPEAN PATENT SPECIFICATION

(11) **EP 3 020 631 B1**
(45) Date of publication and mention of the grant of the patent: **19.09.2018**
(21) Application number: 14192676.6
(22) Date of filing: 11.11.2014
(51) Int. Cl.: B64C 21/02, B32B 1/00, B32B 15/14, B32B 15/18, B32B 15/20, B32B 3/26, B32B 3/28, B32B 3/30, B32B 5/02, B32B 5/18, B32B 5/22, B32B 5/24, B32B 5/26, B32B 7/04, B32B 7/12

(54) **Aerodynamic component and method for producing an aerodynamic component**
Aerodynamisches Bauteil und Verfahren zur Herstellung eines aerodynamischen Bauteils
Composant aérodynamique et procédé de fabrication d'un composant aérodynamique

(43) Date of publication of application: 18.05.2016
(73) Proprietor: Airbus Operations GmbH, 21129 Hamburg (DE)
(72) Inventor: Teich, Benjamin, 21129 Hamburg (DE)
(74) Representative: Schicker, Silvia

(56) References cited:
- WO-A1-2005/113336
- DE-A1- 19 649 132
- DE-A1-102010 014 641
- US-A1- 2009 210 103

## Description

The invention relates to an aerodynamic component, in particular an aerodynamic aircraft component, and a method for producing an aerodynamic component of this kind.

In order to control a boundary layer developing adjacent to an aerodynamic surface exposed to a high speed air flow such as, for example, a surface and in particular a leading edge of an aerodynamic aircraft component, it is known in art to inject air into or to withdraw air from the boundary layer. EP 2 483 148 B1 and US 8,800,915 B2 disclose an aircraft component comprising a surface for boundary layer suction on the outer skin of an aircraft where drawing off by boundary layer suction can take place. The composite component comprises a base body with an extruded profile made of a light metal, a plurality of stringers extruded from the base body and forming a plurality of open suction channels arranged next to one another on the base body, and a micro-perforated metal cover sheet made of titanium or a stainless steel as a corrosion-resistant metal applied to stringer heads thereby forming the surface where drawing off by boundary layer suction can take place.

US 2009/0210103 A1 discloses means of controlling airplanes in flight by controlling the laminar airflow over the lifting surfaces. WO 2005/113336 A1 discloses a double-walled aircraft wing having perforations for boundary layer suction in the outer skin.

The invention is directed at the object of specifying a lightweight and easy to manufacture aerodynamic component which allows the control of a boundary layer developing adjacent to a surface thereof when being exposed to a high speed air flow. Furthermore, the invention is directed at the object of providing a method for efficiently producing an aerodynamic component of this kind.

This object is achieved by an aerodynamic component having the features of Claim 1 and a method for producing an aerodynamic component having the features of Claim 7. An aerodynamic component which is in particular suitable for use in an aircraft, for example as a leading edge of an engine nozzle, a wing or a vertical or horizontal stabilizer, comprises an outer skin sheet. The outer skin sheet has an inner surface as well as an outer surface and is provided with a plurality of perforation openings extending through the outer skin sheet and allowing a flow of air therethrough. In particular, the outer skin sheet is provided with micro-perforation openings which may be evenly distributed across the outer skin sheet. An outer surface of the outer skin sheet forms an aerodynamic surface of the aerodynamic component, i.e. in use of the aerodynamic component, for example, when the aerodynamic component is installed in an aircraft and the aircraft is in flight, the outer surface of the outer skin sheet is exposed to a high speed air flow. As a result, a boundary layer is formed across the aerodynamic surface of the aerodynamic component, i.e. the outer surface of the outer skin sheet.

The aerodynamic component further comprises a sandwich panel which includes an outer layer facing the inner surface of the outer skin sheet, an inner layer facing away from the inner surface of the outer skin sheet and a foam core sandwiched between the outer layer and the inner layer. The sandwich panel is provided with a plurality of connection openings extending through the sandwich panel between the outer layer and the inner layer and allowing a flow of air therethrough. Basically, the connection openings extending through the sandwich panel may be formed by open pores or pore channels which are present in the foam core of the sandwich panel anyway. Preferably, however, the connection openings are designed in the form of tubular channels which may extend through the sandwich panel substantially perpendicular to both, the inner and the outer layer of the sandwich panel. The tubular channels may simply be formed by bores extending through the sandwich panel. It is, however, also conceivable to provide the tubular channels with insertion elements in the form of, for example, sleeves which may be inserted into bores extending through the sandwich panel. Beside a reinforcing effect, insertion elements in the form of, for example, sleeves also provide for an increased geometrical accuracy of an inner surface of the tubular channels.

The aerodynamic component can be flown through with air via the perforation openings provided in the outer skin sheet and the connection openings extending through the sandwich panel. In use of the aerodynamic component, i.e. for example when the aerodynamic component is installed in an aircraft, a boundary layer formed across the aerodynamic surface of the aerodynamic component thus can be controlled by either injecting air into the boundary layer or by withdrawing air from the boundary layer. The aerodynamic component described herein is particularly suitable for use in an application wherein air should be withdrawn from the boundary layer forming across the aerodynamic surface of the aerodynamic component.

For example, a suction effect in the region of the aerodynamic surface of the aerodynamic component, i.e. in the region of the outer surface of the outer skin sheet can be achieved in an active manner by connecting the connection openings extending through the sandwich panel to a suction device which may, for example, be designed in form a pump. As an alternative, it is, however, also conceivable to connect the connection openings to a space wherein a pressure prevails which is lower than a pressure prevailing within the boundary layer formed across the aerodynamic surface of the aerodynamic component so as to withdraw air from the boundary layer in a passive manner. In any case, the design of the aerodynamic component ensures an unhindered flow of air through the outer skin sheet and the sandwich panel. By withdrawing air from the boundary layer, the formation of turbulences in the boundary layer can be reduced or even prevented. Instead, laminar flow characteristics can be maintained within the boundary layer thus allowing a significant reduction of the aerodynamic drag caused by the aerodynamic component in use.

By providing the aerodynamic component with a body made of a sandwich panel, the aerodynamic component is easy to manufacture even in case the aerodynamic component has a complex shape and surface typology. For example, an aerodynamic component comprising a base body made of a sandwich panel can be provided with a double curvature surface shape. In addition, the aerodynamic component, due to the use of a sandwich panel for making the base body of the aerodynamic component, is of a lightweight design. Finally, the aerodynamic component distinguishes by an excellent aerodynamic performance, since the outer skin sheet can be optimized with regard to its aerodynamic properties as desired or necessary.

For example, the outer skin sheet of the aerodynamic component may be made of a metallic material. Titanium, a titanium alloy, corrosion resistant steel alloys or aluminium alloys are suitable materials for manufacturing the outer skin sheet. At least one of the inner and the outer layer of the sandwich panel may be made of a fibre reinforced composite material. In particular, the inner and/or the outer layer of the sandwich panel may be made of a carbon fibre, a glass fibre and/or any other fibre reinforced plastic material. The plastic material may be a curable material, in particular a curable resin such as, for example, an epoxy resin.

In a surface region facing the outer skin sheet, the sandwich panel is provided with a plurality of surface channels extending across the surface of the sandwich panel and connecting the perforation openings provided in the outer skin sheet to the connection openings extending through the sandwich panel. The surface channels thus ensure that air which is withdrawn from a boundary layer formed across the aerodynamic surface of the aerodynamic component is collected in a region of the aerodynamic component below the outer skin sheet and finally can be withdrawn via the connection openings extending through the sandwich panel. The surface channels thus ensure that a sufficient amount of air can be withdrawn from the boundary layer in all operational states of the aerodynamic component. The connection openings may extend through the sandwich panel in a direction substantially perpendicular to longitudinal axes of the surface channels extending across the surface of the sandwich panel, thus allowing the air withdrawn from the boundary layer via the perforation openings formed in the outer skin sheet and the surface channels to be conveyed through the sandwich panel along the shortest possible flow path.

The surface channels provided in the surface region of the sandwich panel which faces the outer skin sheet may extend substantially parallel to each other or radiant across the surface of the sandwich panel. The number of surface channels and/or the distance between adjacent surface channels may be adjusted in dependence on the desired air flow to be withdrawn from the boundary layer via the perforation openings formed in the outer skin sheet and the surface channels.

The surface channels may have a substantially rectangular, a substantially triangular, a substantially semi-circular or any other suitable cross-sectional shape. The connection openings extending through the sandwich panel may open into the surface channels in the region of the apex of the surface channels. In other words, the connection openings may open into the surface channels in a deepest region thereof, thus allowing a particularly efficient withdrawal of air from the surface channels via the connection openings.

In a preferred embodiment of the aerodynamic component, the plurality of surface channels extending across the surface of the sandwich panel are separated from each other by attachment portions which support the outer skin sheet of the aerodynamic component. The attachment portions thus are formed by surface regions of the sandwich panel which is in contact with and carries the outer skin sheet. For example, the surface of the sandwich panel may comprise a plurality of stripe-shaped attachment portions via which the sandwich panel, by means of a suitable joining method, may be connected to the outer skin sheet. In case the sandwich panel is provided with a plurality of surface channels extending substantially parallel to each other, also the attachment portions may extend substantially parallel to each other across the surface of the sandwich panel, thus ensuring that the outer skin sheet can be securely attached to and supported by the attachment portions of the sandwich panel.

The aerodynamic component may further comprise a reinforced edge region extending along at least a portion of a circumference of the inner layer of the sandwich panel. Like the inner layer of the sandwich panel, also the reinforced edge region may be made of a fibre reinforced composite material, in particular a carbon fibre, a glass fibre and/or any other fibre reinforced plastic material. The reinforced edge region may be provided for allowing the aerodynamic component to be installed in place and to be connected to an adjacent or supporting component by using suitable fastening means such as, for example, screws or rivets without impairing the mechanical properties of the aerodynamic component.

The aerodynamic component may further comprise at least one of an inner reinforcement sheet arranged between the inner layer and the foam core of the sandwich panel and an outer reinforcement sheet arranged between the foam core and the outer layer of the sandwich panel. The inner reinforcement sheet and/or the outer reinforcement sheet may extend across the entire surface area of the inner layer and the foam core of the sandwich panel, respectively. It is, however, also conceivable to provide the aerodynamic component with an inner reinforcement sheet and/or an outer reinforcement sheet which extend(s) across only a portion of the inner layer and the foam core of the sandwich panel, respectively. For example, a leading edge region of the aerodynamic component may be provided with an inner reinforcement sheet and/or an outer reinforcement sheet in order to increase the resistance of the aerodynamic component against bird strike. Like the reinforced edge region, also the inner and/or the outer reinforcement sheet may be made of a fibre reinforced composite material, in particular a carbon fibre, a glass fibre and/or any other fibre reinforced plastic material.

In a method for producing an aerodynamic component, an outer skin sheet is provided which has an inner surface and an outer surface and which is provided with a plurality of perforation openings allowing a flow of air therethrough. The outer surface of the outer skin sheet is adapted to form an aerodynamic surface of the aerodynamic component. Furthermore, a sandwich panel is provided which includes an outer layer, an inner layer and a foam core sandwiched between the outer layer and the inner layer. A plurality of connection openings are formed in the sandwich panel which extend through the sandwich panel between the outer layer and the inner layer and which allow a flow of air therethrough. The outer skin is attached to the sandwich panel in such a manner that the outer layer of the sandwich panel faces the inner surface of the outer skin sheet and such that the inner layer of the sandwich panel faces away from the inner surface of the outer skin sheet.

The outer skin sheet may be made of a metallic material, in particular of titanium, a titanium alloy, a corrosion resistant steel alloy or an aluminium alloy. At least one of the inner and the outer layer of the sandwich panel may be made of a fibre reinforced composite material, in particular a carbon fibre, a glass fibre and/or any other fibre reinforced plastic material.

The sandwich panel, in a surface region facing the outer skin sheet, is provided with a plurality of surface channels extending across the surface of the sandwich panel and connecting the perforation openings provided in the outer skin sheet to the connection openings extending through the sandwich panel. The surface channels may extend substantially parallel to each other or radiant across the surface of the sandwich panel. Additionally or alternatively thereto, the connection openings may open into the surface channels in the region of an apex of the surface channels.

The outer skin sheet of the aerodynamic component may be attached to attachment portions of the sandwich panel which separate the plurality of surface channels extending across the surface of the sandwich panel from each other.

In a method for producing an aerodynamic component, the production of the sandwich panel may comprise the step of applying a semi-finished inner layer to a surface of a positive preform tool. The semi-finished inner layer may be a fibre prepreg, i.e. an arrangement of reinforcing fibres in the form of short fibres, long fibres, a fibre web or a fibre mesh which are impregnated with a curable material. Alternatively, the semi-finished inner layer may be a dry fibre arrangement, i.e. may consist of fibres which are not impregnated with a curable material. The positive preform tool receiving the semi-finished inner layer preferably resembles the shape of the aerodynamic component to be manufactured. In dependence on the complexity of the shape of the aerodynamic component to be manufactured, the semi-finished inner layer, when being applied to the surface of the preform tool, may be provided in only one piece or may comprise separate portions which are connected to each other during the following manufacturing steps described below.

A foam core of the sandwich panel may be applied onto the semi-finished inner layer. Preferably, the foam core already is provided with surface channels extending across a surface of the foam core. For example, the surface channels may be formed in the foam core upon solidifying or curing the foam core in a suitable forming tool. Alternatively, the surface channels may be formed in the foam core by a suitable shaping process such as machining or milling. Like the semi-finished inner layer, also the foam core, in dependence on the complexity of the shape of the aerodynamic component to be manufactured, may be provided in only one piece or may comprise separate portions.

A semi-finished outer layer may be applied onto the foam core. Like the semi-finished inner layer, also the semi-finished outer layer may be a fibre prepreg layer or a dry fibre arrangement. Further, also the semi-finished outer layer may be provided in only one piece or may comprise separate portions.

After stacking the semi-finished inner layer, the foam core and the semi-finished outer layer on top of each other onto the positive preform tool, the layer arrangement comprising the semi-finished inner layer, the foam core and the semi-finished outer layer may be moved from the positive preform tool into a negative forming tool in such a manner that an outer surface of the semi-finished outer layer which faces away from the foam core is in contact with a forming surface of the forming tool. The negative forming tool preferable resembles a negative form of the aerodynamic component to be manufactured.

A curable material, in particular a curable resin material may be injected into the semi-finished inner layer and the semi-finished outer layer. The injection of a curable material may involve the application of a vacuum to the semi-finished inner layer and the semi-finished outer layer. Thereafter, the curable material injected into the semi-finished inner layer and the semi-finished outer layer may be cured so as to provide the inner layer and the outer layer of the sandwich panel. The curing step may take place at an elevated temperature and/or pressure as desired. During the curing step multiple portions of the semi-finished inner layer, the semi-finished outer layer and/or the foam core are connected to each other. In addition, the semi-finished inner layer and the semi-finished outer layer are connected to the foam core.

The sandwich panel finally may be removed from the forming tool and the connection openings may be drilled into the sandwich panel at the desired locations.

In particular in case the foam core, upon being placed in the negative forming tool together with the semi-finished inner layer and the semi-finished outer layer, already is provided with surface channels extending across the surface of the foam core, core elements may be arranged in the forming tool and/or the layer arrangement prior to inserting the layer arrangement comprising the semi-finished inner layer, the foam core and the semi-finished outer layer into the forming tool. The core elements may be received within the surface channels extending across the surface of the foam core when the layer arrangement is arranged in the forming tool and thus may serve to force the semi-finished outer layer against the foam core. It may thus be ensured that the semi-finished outer layer closely follows the contour of the surface of the foam core which is provided with the surface channels.

The method for producing an aerodynamic component may further comprise the application of a semi-finished reinforced edge region to the surface of the positive preform tool which extends along at least a portion of the circumference of the semi-finished inner layer. The semi-finished reinforced edge region may be applied to the positive preform tool in only one piece or may comprise separate portions. A semi-finished inner reinforcement sheet may be arranged between the semi-finished inner layer and the foam core and/or a semi-finished outer reinforcement sheet may be arranged between the foam core and the semi-finished outer layer.

A curable material, in particular a curable plastic material such as, for example, a curable resin, may be injected into the semi-finished reinforced edge region, the semi-finished reinforcement sheet and/or the semi-finished outer reinforcement sheet. The curable material injected into at least one of the semi-finished reinforced edge region, the semi-finished inner reinforcement sheet and the semi-finished outer reinforcement sheet may be cured so as to provide at least one of a reinforced edge region extending along at least a portion of a circumference of the inner layer of the sandwich panel, an inner reinforcement sheet arranged between the inner layer and the foam core of the sandwich panel and an outer reinforcement sheet arranged between the foam core and the outer layer of the sandwich panel. The injection of the curable material and the curing of the curable material may be carried out as described above with respect to the inner and the outer layer of the sandwich panel. Preferably, the same curable material is injected into all semi-finished components in a single process step. The curable material then can be cured in a single further process step.

Finally, the outer skin sheet which already is provided with perforation openings may be attached to the sandwich panel in such a manner that the outer layer of the sandwich panel faces the inner surface of the outer skin sheet and such that the inner layer of the sandwich panel faces away from the inner surface of the outer skin sheet. In particular, the outer skin sheet may be attached to the attachment portions which in the final aerodynamic component support the outer skin sheet, for example by gluing.

Preferred embodiments of the invention now are described in more detail with reference to the appended schematic drawings, wherein
- Figure 1: shows an aerodynamic component in the form of a leading edge of a vertical stabilizer of an aircraft,
- Figure 2: shows a sandwich panel of the aerodynamic component according to Figure 1,
- Figure 3: shows an outer skin sheet of the aerodynamic component according to Figure 1,
- Figure 4: shows an enlarged view of the aerodynamic component according to Figure 1, and
- Figures 5a-h: show a method for producing the aerodynamic component according to Figure 1.

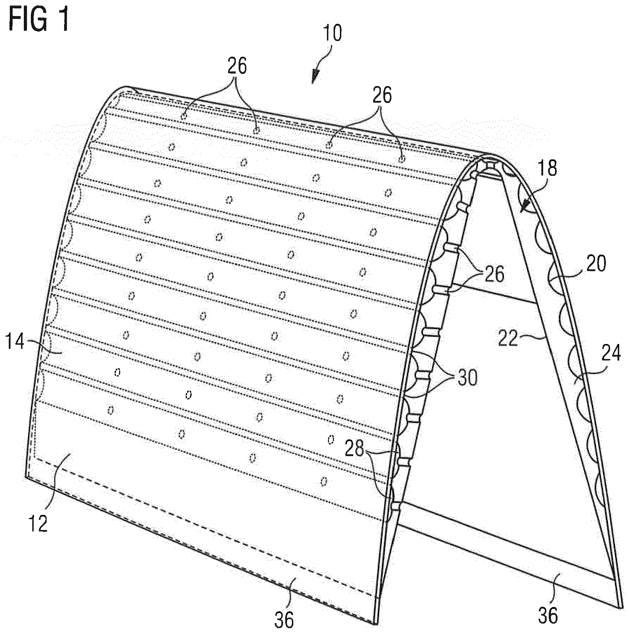

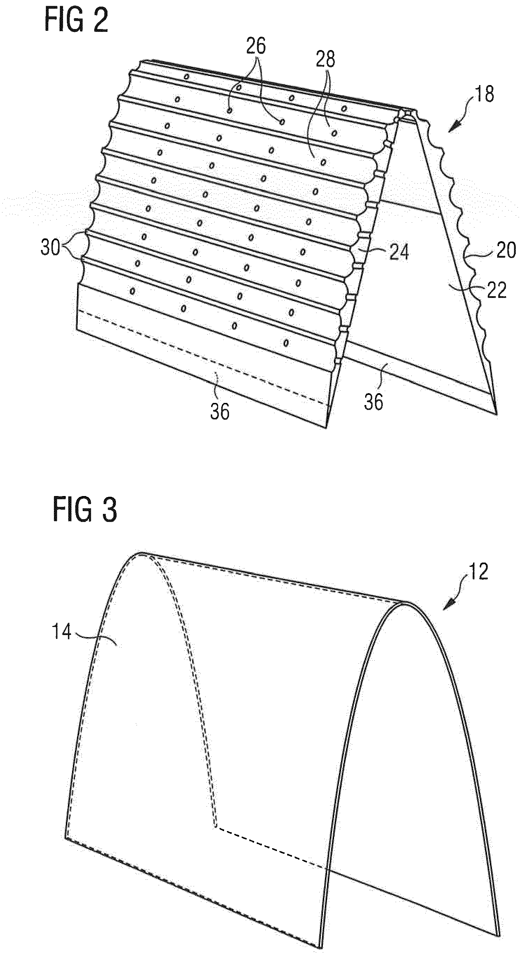

Figure 1 shows aerodynamic component 10 which is suitable for use in an aircraft and designed in the form of a leading edge of a vertical stabilizer of the aircraft. The aerodynamic component 10 comprises an outer skin sheet 12 which is made of a metallic material, in particular of titanium, a titanium alloy, a corrosion resistant steel alloy or an aluminium alloy and which is provided with a plurality of perforation openings 14. The perforation openings 14, which are designed in the form of microperforations, are evenly distributed over the outer skin sheet 12. As becomes apparent in particular from Figure 3, the outer skin sheet 12 has an inner surface and an outer surface, wherein the perforation openings 14 extend between the inner surface and the outer surface of the outer skin sheet 12 and are designed to allow a flow of air therethrough.

When the aerodynamic component 10 is installed in an aircraft and the aircraft is in flight, the outer surface of the outer skin sheet 12 forms an aerodynamic surface of the aerodynamic component 10 which is exposed to a high speed air flow. Thus, during flight operation of an aircraft equipped with the aerodynamic component 10, a boundary layer is formed across the outer surface of the outer skin sheet 12 which significantly influences the aerodynamic drag and hence the fuel consumption of the aircraft, in particular in case turbulences are formed within the boundary layer.

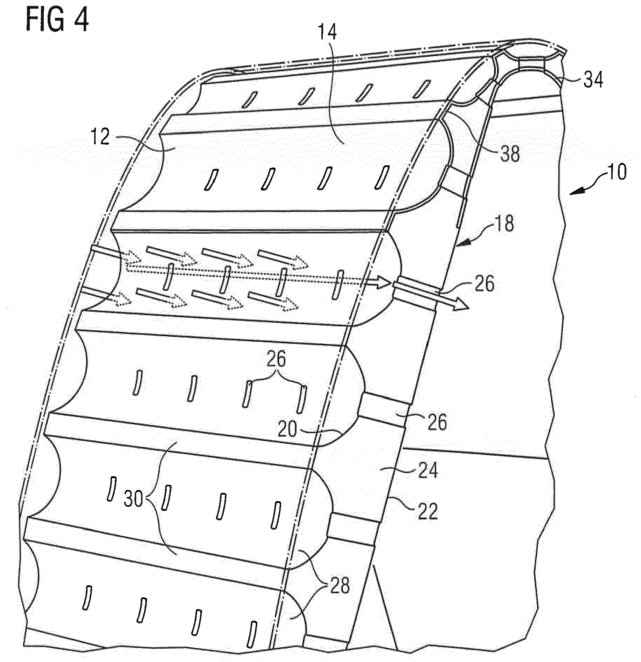

The aerodynamic component 10 further comprises a sandwich panel 18 depicted in greater detail in Figures 2 and 4. The sandwich panel 18 includes an outer layer 20 which faces the inner surface of the outer skin sheet 12 and an inner layer 22 facing away from the inner surface of the outer skin sheet 12 and delimiting an interior space of the aerodynamic component 10. The sandwich panel 18 further comprises a foam core 24 which is sandwiched between the outer layer 20 and the inner layer 22. Both the inner layer 22 and the outer layer 20 of the sandwich panel 18 are made of a fibre reinforced composite material, in particular a glass fibre reinforced plastic material. Alternatively, the inner layer 22 and the outer layer 20 of the sandwich panel 18 may be made of any other fibre reinforced plastic material. In the specific embodiment of an aerodynamic component 10 shown in the drawings, the inner and the outer layer 22, 20 of the sandwich panel 18 are made of a glass fibre reinforced resin.

As becomes apparent in particular from Figure 4, the sandwich panel 18 is provided with a plurality of connection openings 26 which extend through the sandwich panel 18 between the outer layer 20 and the inner layer 22. Basically, the connection openings 26 may be formed by open pores which are present in the foam core 24 of the sandwich panel 18 anyway. In the embodiment of an aerodynamic component 10 shown in the drawings, the connection openings 26, however, have a tubular shape and extend substantially perpendicular to the outer and the inner layer 20, 22 of the sandwich panel 18. As will be explained in greater detail below, the connection openings 26 are formed into the sandwich panel 18 by drilling. Furthermore, if desired, insertion elements in the form of, for example, sleeves (not shown) may be inserted into the connection openings 26 machined into the sandwich panel 18 in order to provide for a reinforcing effect and/or in order to enhance the geometrical accuracy of an inner surface of the connection openings 26. Like the perforation openings 14 provided in the outer sheet 12, also the connection openings 26 extending through the sandwich panel 18 allow a flow of air therethrough.

The sandwich panel 18, in a surface region facing the outer skin sheet 12 is provided with a plurality of surface channels 28, see in particular Figure 2. The surface channels 28 extend across the surface of the sandwich panel 18 substantially parallel to each other and connect the perforation openings 14 provided in the outer skin sheet 12 to the connection opening 26 extending through the sandwich panel 18. In particular, in the specific embodiment of an aerodynamic component 10 shown in the drawings, the surface channels 28 have a substantially semi-circular cross-sectional shape and the connection openings 26 open into the surface channels 28 in the region of an apex of the surface channels 28. Further, the connection openings 26 extend through the sandwich panel 18 in a direction substantially perpendicular to longitudinal axes of the surface channels 18.

The plurality of surface channels 28 extending across the surface of the sandwich panel 18 are separated from each other by attachment portions 30. Since the surface channels 28 extend across the surface of the sandwich panel 18 substantially parallel to each other, the attachment portions 30 are provided in the form of parallel stripes. The attachment portions 30 are in direct contact with the inner surface of the outer sheet 12, i.e. the outer skin sheet 12 is attached to the sandwich panel 18 via the attachment portions 30 and the attachment portions 30 support the outer skin sheet 12. Alternatively, the surface channels 28 and/or the attachment portions 30 may extend radiant across the surface of the sandwich panel 18.

The aerodynamic component 10 further comprises a reinforced edge region 36 extending along a circumference of the inner layer 22 of the sandwich panel 18, see Figure 1. The reinforced edge region 36 is made of a fibre reinforced composite material, in particular a glass fibre reinforced resin and allows the aerodynamic component 10 to be installed in place and to be connected to an adjacent or supporting component by using suitable fastening means such as, for example, screws or rivets without impairing the mechanical properties of the aerodynamic component 10.

Finally, the aerodynamic component 10 comprises an inner reinforcement sheet 34 arranged between the inner layer 22 and the foam core 24 of the sandwich panel 18, and an outer reinforcement sheet 38 arranged between the foam core 24 and the outer layer 20 of the sandwich panel 18. Like the reinforced edge region 36, also the inner and the outer reinforcement sheet 34, 38 are made of a fibre reinforced composite material, in particular a glass fibre reinforced plastic material. The inner reinforcement sheet 34 and/or the outer reinforcement sheet 38 extend across a leading edge region of the aerodynamic component 10 and serve to increase the resistance of the aerodynamic component 10 against bird strike, hail strike or any other impact event.

In use of the aerodynamic component 10, i.e. when the aerodynamic component 10 is installed in an aircraft and the aircraft is in flight, it is possible to control the flow characteristics of the boundary layer forming across the aerodynamic surface, i.e. the outer surface of the outer skin sheet 12 by withdrawing air from the boundary layer through the aerodynamic component 10. Specifically, air may be withdrawn from the boundary layer either in an active manner by means of a pump or in a passive manner by connecting an interior space of the aerodynamic component 10 to a low pressure region of the aircraft. In any case, air may be withdrawn from the boundary layer through the perforation openings 14 provided in the outer skin sheet 12 and received in the surface channels 18 extending across the surface of the sandwich panel 18. From the surface channels 18, the air may be drawn through the connection openings 26 and conveyed into an interior space of the aerodynamic component 10.

By withdrawing air from the boundary layer formed across the aerodynamic surface of the aerodynamic component 10, the flow characteristics within the boundary layer can be controlled. In particular, the formation of turbulences can be reduced or even avoided, thus maintaining substantially laminar flow characteristics in the boundary layer. As a result, the aerodynamic drag caused by the aerodynamic component 10 and hence the fuel consumption of an aircraft equipped with the aerodynamic component 10 can be reduced. The aerodynamic component 10 thus allows an efficient control of the flow characteristics of the boundary layer formed across the aerodynamic surface of the aerodynamic component 10 while still being of a lightweight design and while being relatively easy to manufacture as will be described in more detail further below.

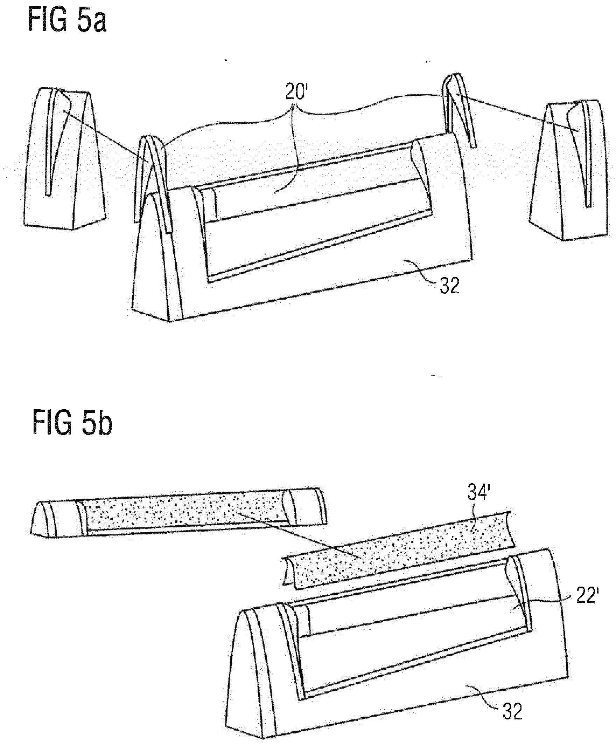

A method for producing the aerodynamic component 10 according to Figure 1 is shown in Figures 5a-h. In a first step, see Figure 5a, a semi-finished inner layer 22', which is intended to form the inner layer 22 of the sandwich panel 18, is applied to a surface of a positive preform tool 32. In the specific embodiment of an aerodynamic component 10 discussed herein, the semi-finished inner layer 22' is designed in the form of a dry glass fibre mat. Further, the semi-finished inner layer 22' is applied to the preform tool 32 in three portions in order to allow the semi-finished inner layer 22' to follow the surface contour of the preform tool 32. Of course, it is also conceivable to use a semi-finished inner layer 22' which is separated into less or more than three portions or which is not separated at all.

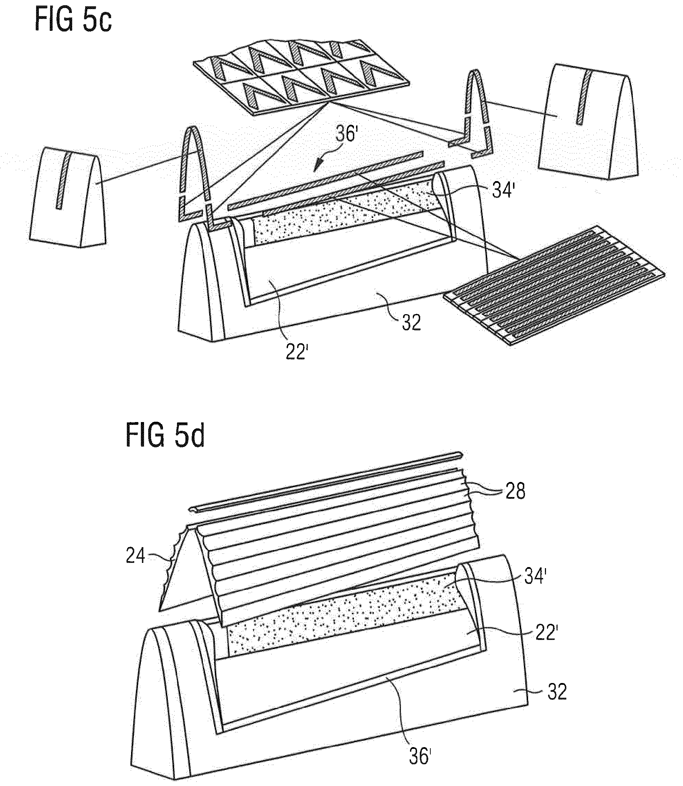

Thereafter, a semi-finished inner reinforcement sheet 34' which is intended to form the inner reinforcement sheet 34 and which, like the semi-finished inner layer 22', is designed in the form of a dry glass fibre laminate is applied onto the semi-finished inner layer 22', see Figure 5b. In addition, a semi-finished reinforced edge region 36' which is divided into several portions so as to follow the circumference of the semi-finished inner layer 22' and which is intended to form the reinforced edge region 36 is applied to the preform tool 32, see Figure 5c. Also the semi-finished reinforced edge region 36' is designed in the form of a dry glass fibre mat.

In a next step, the foam core 24 of the sandwich panel is applied onto the semi-finished inner layer 22', see Figure 5d. Again, in order to follow the contour of the preform tool 32, the foam core 24 is divided into three portions. Of course, it is also conceivable to use a foam core 24 which is separated into less or more than three portions or which is not separated at all. Furthermore, the foam core 24 is already provided with surface channels 28' which extend across the surface of the foam core 24 and which in the final aerodynamic component 10 serve to form the surface channels 28.

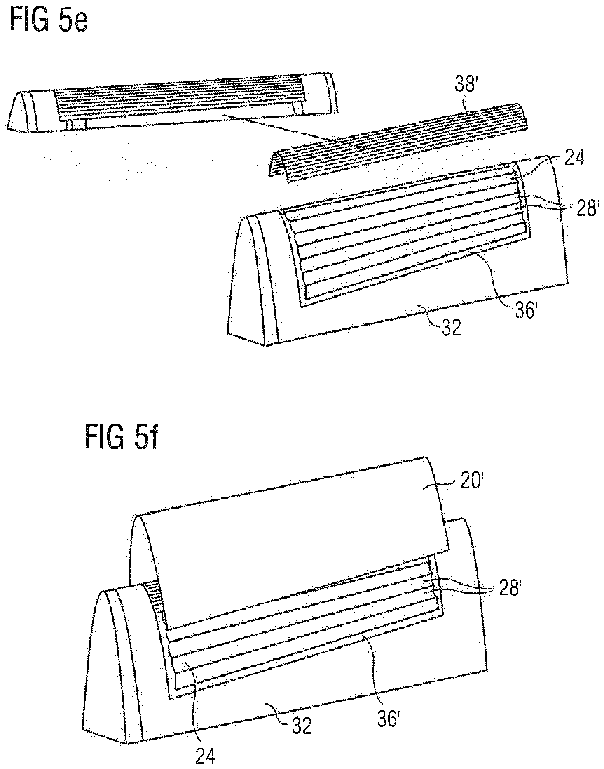

In a next step depicted in Figure 5e, a semi-finished outer reinforcement sheet 38' is applied onto the foam core 24 which, like the semi-finished reinforcement sheet 34' extends across a leading edge region of the aerodynamic component 10 to be manufactured. The semi-finished outer reinforcement sheet 38' is designed in the form of a dry glass fibre laminate and is intended to form the outer reinforcement sheet 38 which, in the final aerodynamic component 10, is provided between the foam core 24 and the outer layer 20 of the sandwich panel 18.

In a next step, a semi-finished outer layer 20' is applied onto the foam core 24, see Figure 5f. The semi-finished outer layer 20' also is designed in the form of a dry fibre laminate and intended to form the outer layer 20 of the sandwich panel 18.

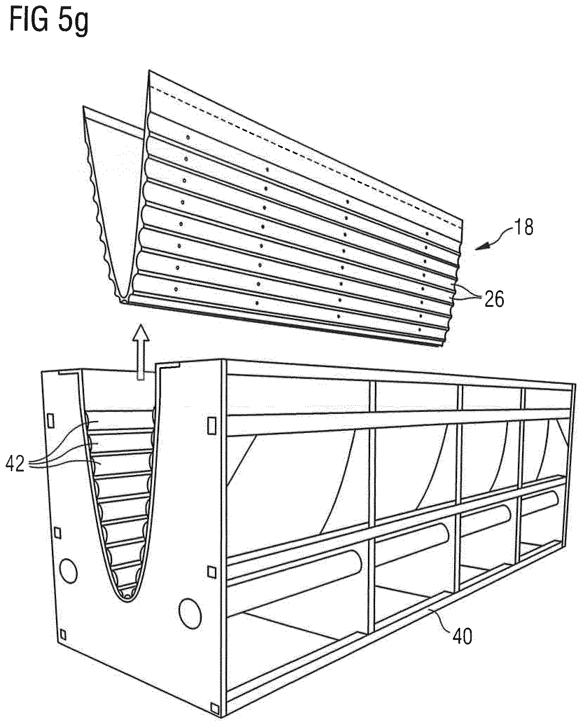

The layer arrangement comprising the semi-finished inner layer 22', the foam core 24, the semi-finished outer layer 20' and the semi-finished reinforcement components 34', 36', 38' are moved from the positive preform tool 32 into a negative forming tool 40 depicted in Figure 5g in such a manner that an outer surface of the semi-finished outer layer 20' which faces away from the foam core 24 comes into contact with a forming surface of the forming tool 40. Prior to inserting the layer arrangement into the forming tool 40, core elements 42 are arranged in the forming tool 40 and/or the layer arrangement which are received within the surface channel 28' extending across the surface of the foam core 24 when the layer arrangement is arranged in the forming tool 40. The core elements 42 serve to force the semi-finished outer layer 20' against the foam core 24 and hence to closely follow the surface contour of the foam core 24.

In a next step, a curable material, in particular a resin material, is injected into the layer arrangement and distributed within the semi-finished outer layer 20', the semi-finished inner layer 22' and the semi-finished reinforcement components 34', 36', 38'. The injection of the curable material may involve the application of a vacuum in order to enhance the distribution of the material within the layer arrangement. Finally, the curable material injected into the layer arrangement is cured at an elevated temperature and/or at an elevated pressure as desired. The sandwich panel 18 then is removed from the forming tool 40 and the connection openings 26 are drilled, see Figure 5g.

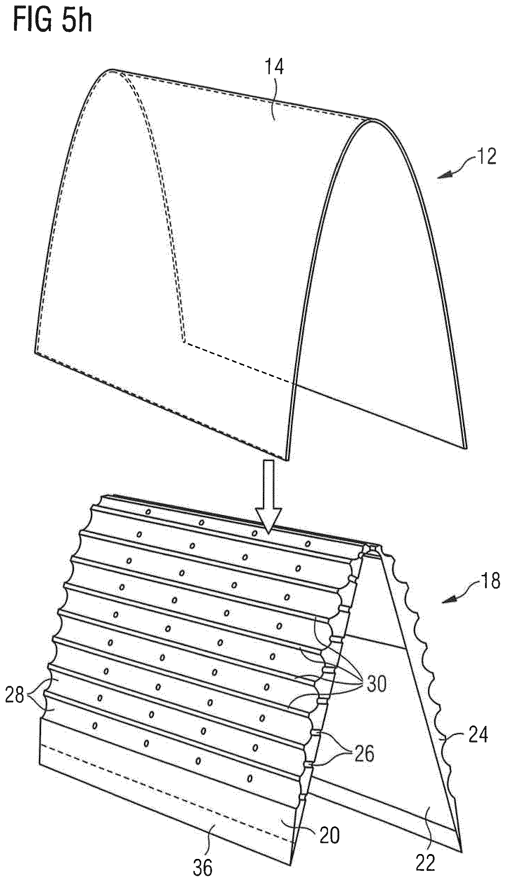

In a last step depicted in Figure 5h, the outer skin sheet 12 which already is provided with the perforation openings 14 is attached to the sandwich panel 18 in such a manner that the outer layer 20 of the sandwich panel 18 faces the inner surface of the outer skin sheet 12 and such that the inner layer 22 of the sandwich panel 18 faces away from the inner surface of the outer skin sheet 12. In particular, the outer skin sheet 12 is attached to the attachment portions 30 which in the final aerodynamic component 10 support the outer skin sheet 12.

## Claims

1. An aerodynamic component (10), in particular for use in an aircraft, the component (10) comprising:
- an outer skin sheet (12) having an inner surface and an outer surface and being provided with a plurality of perforation openings (14) allowing a flow of air therethrough, wherein the outer surface of the outer skin sheet (12) forms an aerodynamic surface of the aerodynamic component (10), and
- a sandwich panel (18) which includes an outer layer (20) facing the inner surface of the outer skin sheet (12), an inner layer (22) facing away from the inner surface of the outer skin sheet (12) and a foam core (24) sandwiched between the outer layer (20) and the inner layer (22), and which is provided with a plurality of connection openings (26) extending through the sandwich panel (24) between the outer layer (20) and the inner layer (22) and allowing a flow of air therethrough,
**characterized in that**
the sandwich panel (18), in a surface region facing the outer skin sheet (12), is provided with a plurality of surface channels (28) extending across the surface of the sandwich panel (18) and connecting the perforation openings (14) provided in the outer skin sheet (12) to the connection openings (26) extending through the sandwich panel (18).

2. The aerodynamic component according to Claim 1,
wherein the outer skin sheet (12) is made of a metallic material, in particular of titanium, a titanium alloy, a corrosion resistant steel alloy or an aluminium alloy and/or wherein at least one of the inner and the outer layer (22, 20) of the sandwich panel (24) is made of a fibre reinforced composite material, in particular a carbon fibre or glass fibre reinforced plastic material.

3. The aerodynamic component according to Claim 1 or 2,
wherein the surface channels (28) extend substantially parallel to each other across the surface of the sandwich panel (18).

4. The aerodynamic component according to any one of Claims 1 to 3,
wherein the connection openings (26) open into the surface channels (28) in the region of an apex of the surface channels (28).

5. The aerodynamic component according to any one of Claims 1 to 4,
wherein the plurality of surface channels (28) extending across the surface of the sandwich panel (18) are separated from each other by attachment portions (30) which support the outer skin sheet (12) of the aerodynamic component (10).

6. The aerodynamic component according to any one of Claims 1 to 5,
further comprising at least one of:
- a reinforced edge region (36) extending along at least a portion of a circumference of the inner layer (22) of the sandwich panel (18),
- an inner reinforcement sheet (34) arranged between the inner layer (22) and the foam core (24) of the sandwich panel (18), and
- an outer reinforcement sheet (38) arranged between the foam core (24) and the outer layer (20) of the sandwich panel (18).

7. A method for producing an aerodynamic component, the method comprising the steps:
- providing an outer skin sheet (12) having an inner surface and an outer surface and being provided with a plurality of perforation openings (14) allowing a flow of air therethrough, wherein the outer surface of the outer skin sheet (12) is adapted to form an aerodynamic surface of the aerodynamic component (10), and
- providing a sandwich panel (18) which includes an outer layer (20), an inner layer (22) and a foam core (24) sandwiched between the outer layer (20) and the inner layer (22),
- forming a plurality of connection openings (26) in the sandwich panel (18) which extend through the sandwich panel (18) between the outer layer (20) and the inner layer (22) and which allow a flow of air therethrough, and
- attaching the outer skin sheet (12) to the sandwich panel (18) in such a manner that the outer layer (20) of the sandwich panel (18) faces the inner surface of the outer skin sheet (12) and such that the inner layer (22) of the sandwich panel (18) faces away from the inner surface of the outer skin sheet (12),
**characterized in that**
the sandwich panel (18), in a surface region facing the outer skin sheet (12), is provided with a plurality of surface channels (28) extending across the surface of the sandwich panel (18) and connecting the perforation openings (14) provided in the outer skin sheet (12) to the connection openings (26) extending through the sandwich panel (18).

8. The method according to Claim 7,
wherein the outer skin sheet (12) is made of a metallic material, in particular of titanium, a titanium alloy, a corrosion resistant steel alloy or an aluminium alloy and/or wherein at least one of the inner and the outer layer (22, 20) of the sandwich panel (18) is made of a fibre reinforced composite material, in particular a carbon fibre or glass fibre reinforced plastic material.

9. The method according to Claim 7 or 8,
wherein the surface channels (28) extend substantially parallel to each other across the surface of the sandwich panel (18) and/or wherein the connection openings (26) open into the surface channels (28) in the region of an apex of the surface channels (28).

10. The method according to any one of Claims 7 to 9,
wherein the outer skin sheet (12) of the aerodynamic component (10) is attached to attachment portions (30) of the sandwich panel (18) which separate the plurality of surface channels (28) extending across the surface of the sandwich panel (18) from each other.

11. The method according to any one of Claims 7 to 10,
comprising at least one of the further steps:
- applying a semi-finished inner layer (22') to a surface of a positive preform tool (32),
- applying the foam core (24) which in particular already is provided with surface channels (28') extending across a surface of the foam core (24) onto the semi-finished inner layer (22'),
- applying a semi-finished outer layer (20') onto the foam core (24),
- moving the layer arrangement comprising the semi-finished inner layer (22'), the foam core (24) and the semi-finished outer layer (20') from the positive preform tool (32) into a negative forming tool (40) in such a manner that an outer surface of the semi-finished outer layer (20') which faces away from the foam core (24) is in contact with a forming surface of the forming tool (40),
- injecting a curable material into the semi-finished inner layer (22') and the semi-finished outer layer (20'),
- curing the curable material injected into the semi-finished inner layer (22') and the semi-finished outer layer (20') so as to provide the inner layer (22) and the outer layer (20) of the sandwich panel (18),
- removing the sandwich panel (18) from the forming tool (40), and
- drilling the connection openings (26) into the sandwich panel (18).

12. The method according to Claim 11,
wherein core elements (42) are arranged in at least one of the forming tool (40) and the layer arrangement which are received within the surface channels (28') extending across a surface of the foam core (24) when the layer arrangement is arranged in the forming tool (40) so as to force the semi-finished outer layer (20') against the foam core (24).

13. The method according to Claim 11 or 12,
comprising at least one of the further steps:
- applying a semi-finished reinforced edge region (36') to the surface of the positive preform tool (32) which extends along at least a portion of a circumference of the semi-finished inner layer (22'),
- arranging a semi-finished inner reinforcement sheet (34') between the semi-finished inner layer (22') and the foam core (24),
- arranging a semi-finished outer reinforcement sheet (38') between the foam core (24) and the semi-finished outer layer (20'),
- injecting a curable material into at least one of the semi-finished reinforced edge region (36'), the semi-finished inner reinforcement sheet (34') and the semi-finished outer reinforcement sheet (38'),
- curing the curable material so as to provide at least one of a reinforced edge region (36) extending along at least a portion of a circumference of the inner layer (22) of the sandwich panel (18), an inner reinforcement sheet (34) arranged between the inner layer (22) and the foam core (24) of the sandwich panel (18) and an outer reinforcement sheet (38) arranged between the foam core (24) and the outer layer (20) of the sandwich panel (18).

## Patentansprüche

1. Aerodynamische Komponente (10), insbesondere zur Verwendung in einem Flugzeug, wobei die Komponente (10) umfasst:
- eine Außenhautschicht (12), die eine Innenfläche und eine Außenfläche hat und mit einer Mehrzahl von von einem Luftstrom durchströmbaren Perforationsöffnungen (14) versehen ist, wobei die Außenfläche der Außenhautschicht (12) eine aerodynamische Oberfläche der aerodynamischen Komponente (10) bildet, und
- ein Sandwichpaneel (18), das eine der Innenfläche der Außenhautschicht (12) zugewandte Außenschicht (20), eine von der Innenfläche der Außenhautschicht (12) abgewandte Innenschicht (22) und einen zwischen der Außenschicht (20) und der Innenschicht (22) angeordneten Schaumkern (24) umfasst und das mit einer Mehrzahl von Verbindungsöffnungen (26) versehen ist, die sich zwischen der Außenschicht (20) und der Innenschicht (22) durch das Sandwichpaneel (4 und 20) erstrecken und einem Luftstrom durchströmbar sind,
**dadurch gekennzeichnet, dass**
das Sandwichpaneel (18) in einem der Außenhautschicht (12) zugewandten Oberflächenbereich mit einer Mehrzahl von Oberflächenkanälen (28) versehen ist, die sich über die Oberfläche des Sandwichpaneels (18) erstrecken und die in der Außenhautschicht (12) vorgesehenen Perforationsöffnungen (14) mit den sich durch das Sandwichpaneel (18) erstreckenden Verbindungsöffnungen (26) verbinden.

2. Aerodynamische Komponente gemäß Anspruch 1,
wobei die Außenhautschicht (12) aus einem metallischen Material, insbesondere aus Titan, einer Titanlegierung, einer korrosionsbeständigen Stahllegierung oder einer Aluminiumlegierung besteht und/oder wobei die Innenschicht und/oder die Außenschicht (22, 20) des Sandwichpaneels (24) aus einem faserverstärkten Verbundmaterial, insbesondere einem carbonfaser- oder glasfaserverstärkten Kunststoffmaterial besteht.

3. Aerodynamische Komponente gemäß Anspruch 1 oder 2,
wobei sich die Oberflächenkanäle (28) im Wesentlichen parallel zueinander über die Oberfläche des Sandwichpaneels (18) erstrecken.

4. Aerodynamische Komponente gemäß einem der Ansprüche 1 bis 3,
wobei die Verbindungsöffnungen (26) im Bereich eines Scheitels der Oberflächenkanäle (28) in die Oberflächenkanäle (28) münden.

5. Aerodynamische Komponente gemäß einem der Ansprüche 1 bis 4,
wobei die Mehrzahl von Oberflächenkanälen (28), die sich über die Oberfläche des Sandwichpaneels (18) erstrecken durch Befestigungsabschnitte (30) voneinander getrennt sind, die die Außenhautschicht (12) der aerodynamischen Komponente (10) abstützen.

6. Aerodynamische Komponente gemäß einem der Ansprüche 1 bis 5,
die ferner umfasst:
- einen verstärkten Randbereich (36), der sich entlang zumindest eines Abschnitts eines Umfangs der Innenschicht (22) des Sandwichpaneels (18) erstreckt, und/oder
- eine innere Verstärkungsschicht (34), die zwischen der Innenschicht (22) und dem Schaumkern (24) des Sandwichpaneels (18) angeordnet ist, und/oder
- eine äußere Verstärkungsschicht (38), die zwischen dem Schaumkern (24) und der Außenschicht (20) des Sandwichpaneels (18) angeordnet ist.

7. Verfahren zur Herstellung einer aerodynamische Komponenten (10), wobei das Verfahren die Schritte umfasst:
- Bereitstellen einer Außenhautschicht (12), die eine Innenfläche und eine Außenfläche hat und mit einer Mehrzahl von von einem Luftstrom durchströmbaren Perforationsöffnungen (14) versehen ist, wobei die Außenfläche der Außenhautschicht (12) eine aerodynamische Oberfläche der aerodynamischen Komponente (10) bildet, und
- Bereitstellen eines Sandwichpaneels (18), das eine Außenschicht (20), eine Innenschicht (22) und einen zwischen der Außenschicht (20) und der Innenschicht (22) angeordneten Schaumkern (24) umfasst,
- Ausbilden einer Mehrzahl von Verbindungsöffnungen (26) in dem Sandwichpaneel (18), die sich zwischen der Außenschicht (20) und der Innenschicht (22) durch das Sandwichpaneel (4 und 20) erstrecken und einem Luftstrom durchströmbar sind, und
- Befestigen der Außenhautschicht (12) an dem Sandwichpaneel (18) derart, dass die Außenfläche (20) des Sandwichpaneels (18) der Innenfläche der Außenhautschicht (12) zugewandt ist und derart, dass die Innenschicht (22) des Sandwichpaneels (18) von der Innenfläche der Außenhautschicht (12) abgewandt ist,
**dadurch gekennzeichnet, dass**
das Sandwichpaneel (18) in einem der Außenhautschicht (12) zugewandten Oberflächenbereich mit einer Mehrzahl von Oberflächenkanälen (28) versehen wird, die sich über die Oberfläche des Sandwichpaneels (18) erstrecken und die in der Außenhautschicht (12) vorgesehenen Perforationsöffnungen (14) mit den sich durch das Sandwichpaneel (18) erstreckenden Verbindungsöffnungen (26) verbinden.

8. Verfahren gemäß Anspruch 7,
wobei die Außenhautschicht (12) aus einem metallischen Material, insbesondere aus Titan, einer Titanlegierung, einer korrosionsbeständigen Stahllegierung oder einer Aluminiumlegierung besteht und/oder wobei die Innenschicht und/oder die Außenschicht (22, 20) des Sandwichpaneels (24) aus einem faserverstärkten Verbundmaterial, insbesondere einem carbonfaser- oder glasfaserverstärkten Kunststoffmaterial besteht.

9. Verfahren gemäß Anspruch 7 oder 8,
wobei sich die Oberflächenkanäle (28) im Wesentlichen parallel zueinander über die Oberfläche des Sandwichpaneels (18) erstrecken und/oder wobei die Verbindungsöffnungen (26) im Bereich eines Scheitels der Oberflächenkanäle (28) in die Oberflächenkanäle (28) münden.

10. Verfahren gemäß einem der Ansprüche 7 bis 9,
wobei die Außenhautschicht (12) der aerodynamischen Komponente (10) an Befestigungsabschnitten (30) des Sandwichpaneels (18) befestigt wird, die die Mehrzahl von Oberflächenkanälen (28), die sich über die Oberfläche des Sandwichpaneels (18) erstrecken, voneinander trennen.

11. Verfahren gemäß einem der Ansprüche 7 bis 10,
das mindestens einen der folgenden Schritte umfasst:
- Aufbringen einer Halbzeug-Innenschicht (22') auf eine Oberfläche eines positiven Vorformwerkzeugs (32),
- Aufbringen des Schaumkerns (24), der insbesondere bereits mit Oberflächenkanälen (28') versehen ist, die sich über eine Oberfläche des Schaumkern (24) erstrecken, auf die Halbzeug-Innenschicht (22'),
- Aufbringen einer Halbzeug-Außenschicht (20') auf den Schaumkern (24),
- Bewegen der Schichtanordnung, die die Halbzeug-Innenschicht (22'), den Schaumkern (24) und die Halbzeug-Außenschicht (20') umfasst, aus dem positiven Vorformwerkzeug (32) in ein negatives Formwerkzeug (40) derart, dass eine von dem Schaumkern (24) abgewandte Außenfläche der Halbzeug-Außenschicht (20') in Kontakt mit einer Formoberfläche des Formwerkzeugs (40) steht,
- Einspritzen eines aushärtbaren Materials in die Halbzeug-Innenschicht (22') und die Halbzeug-Außenschicht (20'),
- Aushärten des in die Halbzeug-Innenschicht (22') und die Halbzeug-Außenschicht (20') eingespritzten aushärtbaren Materials, um die Innenschicht (22) und die Außenschicht (20) des Sandwichpaneels (18) zu bilden,
- Entnehmen des Sandwichpaneels (18) aus dem Formwerkzeug (40) und
- Bohren der Verbindungsöffnungen (26) in das Sandwichpaneel (18).

12. Verfahren gemäß Anspruch 11,
wobei Kernelemente (42) in dem Formwerkzeug (40) und/oder der Schichtanordnung angeordnet sind, welche in den Oberflächenkanälen (28') angeordnet sind, die sich über eine Oberfläche des Schaumkern (24) erstrecken, wenn die Schichtanordnung in dem Formwerkzeug (40) angeordnet ist, um die Halbzeug-Außenschicht (20') gegen den Schaumkern (40) zu drängen.

13. Verfahren gemäß Anspruch 11 oder 12,
das mindestens einen der folgenden Schritte umfasst:
- Aufbringen eines verstärkten Halbzeug-Randbereichs (36') auf die Oberfläche des positiven Vorformwerkzeugs (32), der sich entlang zumindest eines Abschnitts eines Umfangs der Halbzeug-Innenschicht (22') erstreckt,
- Anordnen einer inneren Halbzeug-Verstärkungsschicht (34') zwischen der Halbzeug-Innenschicht (22') und dem Schaumkern (24),
- Anordnen einer äußeren Halbzeug-Verstärkungsschicht (38') zwischen dem Schaumkern (24) und der Halbzeug-Außenschicht (20'),
- Einspritzen eines aushärtbaren Materials in den verstärkten Halbzeug-Randbereich (36'), die innere Halbzeug-Verstärkungsschicht (34') und/oder äußere Halbzeug-Verstärkungsschicht (38'),
- Aushärten des aushärtbaren Materials, um einen verstärkten Randbereich (36), der sich entlang zumindest eines Abschnitts eines Umfangs der Innenschicht (22) des Sandwichpaneels (18) erstreckt, eine innere Verstärkungsschicht (34), die zwischen der Innenschicht (22) und dem Schaumkern (24) des Sandwichpaneels (18) angeordnet ist, und/oder eine äußere Verstärkungsschicht (38), die zwischen dem Schaumkern (24) und der Außenschicht (20) des Sandwichpaneels (18) angeordnet ist, zu bilden.

## Revendications

1. Composant aérodynamique (10), en particulier pour une utilisation dans un aéronef, le composant (10) comprenant :
- une feuille de peau extérieure (12) ayant une surface intérieure et une surface extérieure et étant prévue avec une pluralité d'ouvertures de perforation (14) permettant un écoulement d'air à travers celles-ci, dans lequel la surface extérieure de la feuille de peau extérieure (12) forme une surface aérodynamique du composant aérodynamique (10), et
- un panneau sandwich (18) qui inclut une couche extérieure (20) faisant face à la surface intérieure de la feuille de peau extérieure (12), une couche intérieure (22) faisant face à l'opposé de la surface intérieure de la feuille de peau extérieure (12) et un noyau de mousse (24) pris en sandwich entre la couche extérieure (20) et la couche intérieure (22), et qui est prévu avec une pluralité d'ouvertures de connexion (26) s'étendant à travers le panneau sandwich (24) entre la couche extérieure (20) et la couche intérieure (22) et permettant un écoulement d'air à travers celles-ci,
**caractérisé en ce que**
le panneau sandwich (18), dans une région de surface faisant face à la feuille de peau extérieure (12), est prévu avec une pluralité de canaux de surface (28) s'étendant au travers de la surface du panneau sandwich (18) et connectant les ouvertures de perforation (14) prévues dans la feuille de peau extérieure (12) aux ouvertures de connexion (26) s'étendant à travers le panneau sandwich (18).

2. Composant aérodynamique selon la revendication 1,
dans lequel la feuille de peau extérieure (12) est constituée d'un matériau métallique, en particulier de titane, d'un alliage de titane, d'un alliage d'acier résistant à la corrosion ou d'un alliage d'aluminium et/ou dans lequel au moins une des couches intérieure et extérieure (20, 22) du panneau sandwich (24) est constituée d'un matériau composite renforcé de fibres, en particulier un matériau plastique renforcé de fibres de carbone ou de fibres de verre.

3. Composant aérodynamique selon la revendication 1 ou 2,
dans lequel les canaux de surface (28) s'étendent sensiblement parallèles les uns aux autres sur la surface du panneau sandwich (18).

4. Composant aérodynamique selon l'une quelconque des revendications 1 à 3,
dans lequel les ouvertures de connexion (26) s'ouvrent dans les canaux de surface (28) dans la région d'un sommet des canaux de surface (28).

5. Composant aérodynamique selon l'une quelconque des revendications 1 à 4,
dans lequel la pluralité de canaux de surface (28) s'étendant sur la surface du panneau sandwich (18) sont séparés les uns des autres par des parties de fixation (30) qui supportent la feuille de peau extérieure (12) du composant aérodynamique (10).

6. Composant aérodynamique selon l'une quelconque des revendications 1 à 5, comprenant en outre au moins une parmi :
- une région de bord renforcé (36) s'étendant le long d'au moins une partie d'une circonférence de la couche intérieure (22) du panneau sandwich (18),
- une feuille de renfort intérieur (34) agencée entre la couche intérieure (22) et le noyau de mousse (24) du panneau sandwich (18), et
- une feuille de renfort extérieur (38) agencée entre le noyau de mousse (24) et la couche extérieure (20) du panneau sandwich (18).

7. Procédé de production d'un composant aérodynamique, le procédé comprenant les étapes :
- de prévision d'une feuille de peau extérieure (12) ayant une surface intérieure et une surface extérieure et étant prévue avec une pluralité d'ouvertures de perforation (14) permettant un écoulement d'air à travers celles-ci, dans lequel la surface extérieure de la feuille de peau extérieure (12) est adaptée à former une surface aérodynamique du composant aérodynamique (10), et
- de prévision d'un panneau sandwich (18) qui inclut une couche extérieure (20), une couche intérieure (22) et un noyau de mousse (24) pris en sandwich entre la couche extérieure (20) et la couche intérieure (22),
- de formation d'une pluralité d'ouvertures de connexion (26) dans le panneau sandwich (18) qui s'étendent à travers le panneau sandwich (18) entre la couche extérieure (20) et la couche intérieure (22) et permettent un écoulement d'air à travers celles-ci, et
- de fixation de la feuille de peau extérieure (12) au panneau sandwich (18) de telle manière que la couche extérieure (20) du panneau sandwich (18) fait face à la surface intérieure de la feuille de peau extérieure (12) et de telle manière que la couche intérieure (22) du panneau sandwich (18) fait face à l'opposé de la surface intérieure de la feuille de peau extérieure (12),
**caractérisé en ce que**
le panneau sandwich (18), dans une région de surface faisant face à la feuille de peau extérieure (12), est prévu avec une pluralité de canaux de surface (28) s'étendant au travers de la surface du panneau sandwich (18) et connectant les ouvertures de perforation (14) prévues dans la feuille de peau extérieure (12) aux ouvertures de connexion (26) s'étendant à travers le panneau sandwich (18).

8. Procédé selon la revendication 7,
dans lequel la feuille de peau extérieure (12) est constituée d'un matériau métallique, en particulier de titane, d'un alliage de titane, d'un alliage d'acier résistant à la corrosion ou d'un alliage d'aluminium et/ou dans lequel au moins une des couches intérieure et extérieure (20, 22) du panneau sandwich (18) est constituée d'un matériau composite renforcé de fibres, en particulier un matériau plastique renforcé de fibres de carbone ou de fibres de verre.

9. Procédé selon la revendication 7 ou 8,
dans lequel les canaux de surface (28) s'étendent sensiblement parallèles les uns aux autres sur la surface du panneau sandwich (18) et/ou dans lequel les ouvertures de connexion (26) s'ouvrent dans les canaux de surface (28) dans la région d'un sommet des canaux de surface (28).

10. Procédé selon l'une quelconque des revendications 7 à 9,
dans lequel la feuille de peau extérieure (12) du composant aérodynamique (10) est fixée à des parties de fixation (30) du panneau sandwich (18) qui séparent la pluralité de canaux de surface (28) s'étendant sur la surface du panneau sandwich (18) les uns des autres.

11. Procédé selon l'une quelconque des revendications 7 à 10,
comprenant au moins une des étapes additionnelles :
- d'application d'une couche intérieure semi-finie (22') à une surface d'un outil de préforme positive (32),
- d'application du noyau de mousse (24) qui en particulier est déjà prévu avec des canaux de surface (28') s'étendant sur une surface du noyau de mousse (24) sur la couche intérieure semi-finie (22'),
- d'application d'une couche extérieure semi-finie (20') sur le noyau de mousse (24),
- de déplacement de l'agencement de couches comprenant la couche intérieure semi-finie (22'), le noyau de mousse (24) et la couche extérieure semi-finie (20') de l'outil de préforme positive (32) jusque dans un outil de formation de négatif (40) de telle manière qu'une surface extérieure de la couche extérieure semi-finie (20') qui fait face à l'opposé du noyau de mousse (24) est en contact avec une surface de formation de l'outil de formation (40),
- d'injection d'une matière durcissable dans la couche intérieure semi-finie (22') et la couche extérieure semi-finie (20'),
- de durcissement de la matière durcissable injectée dans la couche intérieure semi-finie (22') et la couche extérieure semi-finie (20') de manière à fournir la couche intérieure (22) et la couche extérieure (20) du panneau sandwich (18),
- d'enlèvement du panneau sandwich (18) de l'outil de formation (40), et
- de perçage des ouvertures de connexion (26) dans le panneau sandwich (18).

12. Procédé selon la revendication 11,
dans lequel des éléments (42) de noyau sont agencés dans au moins un de l'outil de formation (40) et de l'agencement de couches qui sont reçus à l'intérieur des canaux de surface (28') s'étendant sur une surface du noyau de mousse (24) lorsque l'agencement de couches est agencé dans l'outil de formation (40) de manière à forcer la couche extérieure semi-finie (20') contre le noyau de mousse (24).

13. Procédé selon la revendication 11 ou 12,
comprenant au moins une des étapes additionnelles :
- d'application d'une région de bord renforcé semi-finie (36') à la surface de l'outil de préforme positive (32) qui s'étend le long d'au moins une partie d'une circonférence de la couche intérieure semi-finie (22'),
- d'agencement d'une feuille de renfort intérieur semi-finie (34') entre la couche intérieure semi-finie (22') et le noyau de mousse (24),
- d'agencement d'une feuille de renfort extérieur semi-finie (38') entre le noyau de mousse (24) et la couche extérieure semi-finie (20'),
- d'injection d'une matière durcissable dans au moins une de la région de bord renforcé semi-finie (36'), de la feuille de renfort intérieur semi-finie (34') et de la feuille de renfort extérieur semi-finie (38'),
- de durcissement de la matière durcissable de manière à fournir au moins une d'une région de bord renforcé (36) s'étendant le long d'au moins une partie d'une circonférence de la couche intérieure (22) du panneau sandwich (18), d'une feuille de renfort intérieur (34) agencée entre la couche intérieure (22) et le noyau de mousse (24) du panneau sandwich (18) et d'une feuille de renfort extérieur (38) agencée entre le noyau de mousse (24) et la couche extérieure (20) du panneau sandwich (18).
